# EUROPEAN PATENT APPLICATION

(11) **EP 2 103 733 A1**
(43) Date of publication of application: **23.09.2009**
(21) Application number: 09250743.3
(22) Date of filing: 17.03.2009
(51) Int. Cl.: D06N 3/00, D06N 3/12, C09D 5/18, C09K 21/14

(54) **Fire and flame resistant linings**

(30) Priority: 17.03.2008 GB 0804935
(71) Applicant: Intumescent Systems Limited, Barfreston Dover Kent CT15 7JG (GB)
(72) Inventor: Ward, Derek Alfred, Barfrestone Kent CT15 7JG (GB)
(74) Representative: Sayer, Robert David

(57) **Abstract**

A fibrous sheet is coated on at least one of its sides with an intumescent water-based coating which comprises an emulsion including inter alia a clear drying flame retardant blowing agent, a charring agent and an epoxy resin water soluble binder. The ratio of binder to charring agent is between 2.0 and 3.0 to 1.0.

## Description

This invention relates to fire and flame resistant linings *inter alia* for doors, panels, curtains and like products and more especially to flame and fire resistant linings which intumesce in the presence of excessive heat and flames.

Intumescent linings are widely used in dorors and other building products to resist the passage of fire between adjoining areas. The linings generally take the form of sheets produced from a mix of fibrous material and particular graphite in a base solution. Such linings are generally fragile to handle and are relatively exspensive to produce.

The present invention sets out in one aspect to provide an improved fire and flame resistant flexible lining capable of providing in excess of 2 hour protection against the passage of flames and smoke in the event of a fire.

In one aspect, the invention provides a fibrous sheet coated on at least one of its sides with an intumescent water-based coating which comprises an emulsion including inter alia a clear drying flame retardant blowing agent, a charring agent and an epoxy resin water soluble binder, the ratio of binder to charring agent being between 2.0 and 3.0 to 1.0.

In a preferred embodiment, the ratio of binder to charring agent is 2.5 and 3.0 to 1.0. A preferred ratio of binder to charring agent is 2.7 to 1.0.

The charring agent preferably comprises pentaerythritol and the blowing agent preferably comprises a solution of dicyanhamide phosphate.

The coating preferably also includes ammonium poly phosphate (APP), mono ethylene glycol, a phosphate surfactant, a defoaming surfactant and an acticide.

One example of a fire retardant fibrous sheet in accordance with the invention will now be describes by way of example only.

A sheet of fibrous material of thickness typically between 1 and 3 mm containing particles of illuma and/or silica held together with a binder was coated on each of its surfaces with the following fire resistant coating.The coating was produced in batches of approximately 110 litres, each batch comprising the ingredients listed below in the quantities specified.

Initially 35.500 kg of acid catalyst ammonium polyphosphate (APP), 27.000kg of water-based epoxy emulsion binder and 12.000kg of charring agent pentaerythritol were fast mixed for successive periods of 5 and 10 minutes to produce a homogeneous paste.

Secondly, 11.000kg of flame retardant blowing agent dicyandiamide phosphate solution was added and fast mixed for a period of 15 minutes.

Thirdly, 14.250kg of flame retardant blowing agent dicyanhamide phosphate, 1.186kg of mono ethylene glycol to improve the film forming properties of the coating and to lower its freezing point, 1.186kg of phosphate surfactant to aid dispersion of the particle content of the mix, 0.178kg of a defoaming surfactant, and 0.024kg of an acticide were added and mixed for a further 15 minutes.

Finally, 32.000kg of water-based epoxy emulsion binder was added and the resultant mix fast mixed for 20 minutes.

The epoxy emulsion acts as a binder and aids charring of the coating in the event that the surface to which it is applied is subjected to excessive heat

The presence of the blowing agent dicyanhamide phosphate ensures that the coating, when dried on a surface, is clear and transparent The blowing agent produces gas and foaming in the char during the intumescent process.

The charring agent pentaerythritol ensures that the char, when produced, has the required consistency to prevent or retard the onset of flames.

The acid catalyst APP catalyses cross-linking during the char process.

An important feature of the coatings is the synergy between the water-based epoxy emulsion binder and the charring agent pentaerythritol. This synergy enables less charring agent to be employed thereby ensuring that, if required, a coating dries to a clear and transparent finish. If the ratio of binder to charring agent is less than 2.5 to 1, a coated surface will not dry to a clear and transparent finish. For coatings which need not dry to a transparent finish, a ratio of 2.0 to 1.0 can be employed. If this ratio exceeds 3 to 1, the flame retardant properties of the coating are degraded.

Coated linings in accordance with the invention have particular application for providing fire protection for wood or wood-related doors and panels, plaster board sheets, and safety curtains.

Coatings may be applied to only one surace of the fibrous sheet and two or more coats can be applied to enhance the fire retardant properties of the lining. Because the coating is quick drying, successive cotings can be applied in a relatively short period of time.

Coatings can be applied using a dipping process, or by use of a spray, brush or roller.

Linings in accordance with the invention have been tested and found to resist the passage of fire for periods in excess of two hours.

It will be appreciated that the foregoing is exemplary of solutions in accordance with the invention and that modifications can readily be made thereto without departing from the true scope of the invention.

## Claims

1. A fibrous sheet coated on at least one of its sides with an intumescent water-based coating which comprises an emulsion including inter alia a clear drying flame retardant blowing agent, a charring agent and an epoxy resin water soluble binder, the ratio of binder to charring agent being between 2.0 and 3.0 to 1.0.

2. A fibrous sheet as claimed in claim 1 wherein the ratio of binder to charring agent is between 2.5 and 3.0 to 1.0.

3. A fibrous sheet as claimed in claim 1 wherein the ratio of binder to charring agent is 2.7 to 1.0.

4. A fibrous sheet as claimed in any one of the preceding claims wherein the charring agent comprises pentaerythritol.

5. A fibrous sheet as claimed in any one of the preceding claims wherein the blowing agent comprises a solution of dicyanhamide phosphate.

6. A fibrous sheet as claimed in any one of the preceding claims wherein the coating comprises ammonium poly phosphate, mono ethylene glycol, a phosphate surfactant, a defoaming surfactant and an acticide.

7. A fibrous sheet coated on at least one side with an intumescent water-based coating substantially as herein described.
